# EUROPEAN PATENT SPECIFICATION

(11) **EP 3 650 507 B1**
(45) Date of publication and mention of the grant of the patent: **03.11.2021**
(21) Application number: 18204731.6
(22) Date of filing: 06.11.2018
(51) Int. Cl.: C09D 7/00

(54) **AQUEOUS COATING COMPOSITION**
WÄSSRIGE BESCHICHTUNGSZUSAMMENSETZUNG
COMPOSITION DE REVÊTEMENT AQUEUSE

(43) Date of publication of application: 13.05.2020
(73) Proprietor: DAW SE, 64372 Ober-Ramstadt (DE)
(72) Inventor: MOHAN, Kirshna V.R., Dubai (AE)
(74) Representative: Metten, Karl-Heinz

(56) References cited:
- WO-A1-2013/072769
- WO-A2-2011/032845
- DE-A1-102005 032 194
- DE-A1-102006 046 860
- DE-A1-102008 002 570
- US-A1- 2011 184 088

## Description

The present invention pertains to an aqueous coating composition, in particular a facade coating composition. Further, the present invention pertains to a coating, in particular a facade coating, obtained by the coating composition. Finally, the present invention pertains to the use of the coating composition for the preparation of a coating, in particular a facade coating.

Coating compositions such as paints for decorating or protecting the facade of buildings are well known. Still, excessive efforts are spent on the development of improved paints both for interior and exterior applications. In general, in order to apply protective or decorative coatings to a wall, ceiling or floor of a building recourse can be made to so-called silicate emulsion paints, synthetic dispersion paints and silicate paints (according to DIN 18363:2016-09). Paint coatings usually have to have a high hiding power and should also exhibit a sufficient mechanical strength, for example against wet abrasion. However, depending on the respective climate conditions different properties may be given priority. For example, facade coatings being exposed to desert climates should have different properties from respective coating systems usually used under the climatic conditions to be found in Central Europe. It would thus be desirable to have access to a coating composition which can cope with the climatic conditions to be found in desert areas as well as in regions having a more moderate climate.

WO 2013/072769 A1 describes an aqueous binder mixture comprising (A) colloidal silica; (B) an aqueous copolymer dispersion obtained by emulsion polymerisation of a monomer mixture comprising (i) at least 40 wt. %, based on the total amount of monomers, of at least one ester of an ethylenically unsaturated carboxylic acid, a vinyl ester of a saturated carboxylic acid and/or a vinyl aromatic monomer; (ii) from o. 1 to 10 wt. %, based on the total amount of the monomers, of at least one ethylenically unsaturated mono- and/or dicarboxylic acid, an ethylenically unsaturated sulfonic acid, an ethylenically unsaturated phosphoric acid, an ethylenically unsaturated phosphonic acid and/or an amide of an ethylenically unsaturated mono- and/or dicarboxylic acid; and (iii) from 0.5 to 15 wt.%, based on the total amount of the monomers, of an ethylenically unsaturated monomer having at least one alkoxysilyl group; and (C) an alkoxy-substituted polysiloxane. Such aqueous polymer-based binder systems shall exhibit reduced water absorption as well as high water vapour permeability without the need to add hydrophobic silicone resins.

US 2011/0184088 A1 discloses a coating material in the form of an aqueous composition containing 25 to 55% by weight of composite particles having an average particle size of 50 to 350 nm in the form of an aqueous dispersion composed of 20 to 60% by weight, based on the composite particles, of inorganic solid having an average particle size of 5 to 100 nm, 40 to 90% by weight, based on the composite particles, of a polymer matrix having a glass transition temperature in the range from -60 to +40°C, obtainable by free-radical emulsion polymerization of at least one ethylenically unsaturated monomer, and from 20 to 50 % by weight of fillers, wherein from 5 to 40 % by weight, based on the total solids content, are selected from aluminium silicates, borosilicate glasses, polymethyl methacrylate particles and polystyrene particles, 1 to 30 % by weight of pigments and 0 to 5 % by weight of one or more thickeners, 0.1 to 20 % by weight of other auxiliaries, in each case based on the total solids content. This coating material shall make available paint coatings based on water-based binders that maintain effective substrate adhesion and exhibit good mechanical stability even in constant contact with water, e.g. in the case of a swimming pool paint.

WO 2011/032845 A2 describes an aqueous composition comprising at least one binder component (B) containing at least one alkoxysilane (B2) and a polymer dispersion (PD), at least one antimicrobial agent (Z), up to 70% by weight of inorganic fillers and/or inorganic pigments, 0.1 to 20% by weight of conventional auxiliaries, and water to 100% by weight. Furthermore, WO 2011/032845 A2 describes a kit-of-parts comprising, as a curable composition of separate parts for joint application, a) a binder component (B) comprising at least one alkoxysilane (B2) and a polymer dispersion (P2D), and b) at least one antimicrobial agent (Z). The aim is to make coatings available which have long-term antimicrobial properties.

DE 10 2008 002 570 A1 describes nanoparticulate silicone organocopolymers in the form of aqueous polymer dispersions or polymer powders redispersible in water, obtainable by means of free-radically initiated polymerisation in aqueous medium and optionally subsequent drying of the polymer dispersion obtained. In the free-radically initiated polymerisation, one reacts: A) one or more monomers selected from the group consisting of vinyl esters, (meth)acrylic esters, vinyl aromatics, olefins, 1,3-dienes, vinyl ethers and vinyl halides and optionally other monomers copolymerizable therewith, in the presence of B) at least one particle P having an average diameter of less than 1000 nm, which is functionalized with ethylenically unsaturated radically polymerisable groups, where the particles P used are B1) one or more from the group of metal oxides and semi-metal oxides and/or B2) special silicone resins, and C) one or more special linear polydiorganosiloxanes, and where B1), B2) and C) are each functionalised with one or more special α-organosilanes. These nanoparticulate silicone organocopolymers shall render coatings accessible which are hydrophobic to an extent that penetration of water into the coatings can be prevented, but which are at the same time also hydrophilic to an extent that the coatings can be wetted by water.

DE 10 2006 046 860 A1 discloses a composition comprising a) mineral filler, b) pigment, c) colloidal silica, and d) an aqueous plastics dispersion. This aqueous plastics dispersion shall comprise a copolymer prepared by emulsion polymerisation and derived from A) at least 40% by weight, based on the total monomer amount, of esters of α,β-unsaturated carboxylic acids, vinyl esters of saturated carboxylic acids, vinylaromatic monomers or combinations of two or more of these monomers, B) 0.1 to 10 wt. %, based on the total monomer amount, of α,β-ethylenically unsaturated mono- and/or dicarboxylic acids, α,β-ethylenically unsaturated sulphonic acids, α,β-ethylenically unsaturated phosphoric acids and/or α,β-ethylenically unsaturated phosphonic acids, C) 0.5 to 15 wt.-%, based on the total monomer amount, of ethylenically unsaturated monomers which have at least one alkoxysilyl group, D) from 0.1 to 10% by weight, based on the total amount of monomer, of an ethylenically unsaturated surface-active monomer containing at least one anionic and/or nonionic emulsifying group, and E) if desired, up to 20% by weight, based on the total amount of monomer, of monomers which are reactive with the monomers of groups A), B), C) and D), with the proviso that, instead of or in addition to the copolymerization of monomer C), 0.5 to 15% by weight, based on the total amount of monomer, of a monomer, which in addition to at least one alkoxysilyl group has at least one amino, mercapto or epoxide group, is added after the emulsion polymerization. These polymer dispersions containing colloidal silica shall provide plaster and paint coatings which are characterised by excellent abrasion resistance, low soiling tendency, high water vapour permeability, good adhesion and good weathering stability.

DE 10 2005 032 194 A1 refers to an aqueous plastics dispersion based on a vinyl ester copolymer having a solids content of up to 80% by weight and a minimum film forming temperature below 20°C. In this case, the vinyl ester copolymer is a multistage polymer and is derived from at least one homopolymer or copolymer A and from at least one homopolymer or copolymer B. The copolymer A is to be derived from a monomer composition A which would give a soft copolymer having a glass transition temperature in the range 0 to 20°C, and the homo- or copolymer B is to be derived from a monomer composition B which would give a hard homo- or copolymer having a glass transition temperature in the range 20 to 50°C. Furthermore, monomer compositions A and B shall be used which give polymers A and B whose glass transition temperatures differ by at least 10 K. Also, the sum of the proportions of polymers A and B in the vinyl ester copolymer shall be at least 50% by weight, based on the vinyl ester copolymer, and the weight ratio of monomer composition A to monomer composition B shall be in the range 95/5 to 5/95. In addition, the monomer composition A has to contain 50 to 100% by weight of at least one vinyl ester of carboxylic acids having 1 to 18 carbon atoms (M1), the monomer composition B has to contain 50 to 100% by weight of at least one vinyl ester of carboxylic acids having 1 to 18 carbon atoms (M1), and at least one of the monomer compositions A or B having 0.05 to 10% by weight of at least one unsaturated, copolymerisable organosilicon compound (M4). It is further required that the vinyl ester copolymer has, based on the total mass of monomers used to prepare the vinyl ester copolymer, from 0 to 3% by weight of structural units derived from at least one ethylenically unsaturated, ionic monomer (M3) and from 0 to 10% by weight of structural units derived from at least one ethylenically unsaturated, nonionic monomer (M5). Finally, according to DE 10 2005 032 194 A1, the aqueous plastics dispersion is to be provided with 0 to 3% by weight of ionic emulsifiers (S1) and at least 0.5% by weight of nonionic emulsifiers (S2), the ratio of the total mass of ionic components (M3) and (S1) to the total mass of nonionic components (M5) and (S2) used has to be less than 1. These aqueous plastics dispersions based on a vinyl ester copolymer shall provide plasticiser- and solvent-free coating compositions which form crack-free coating films at low temperatures and are characterised by improved block resistance and good abrasion resistance.

Therefore, it has been an object of the present invention to provide an aqueous coating composition which allows for good color retention, color durability and/or color fastness and which has a significant dirt or dust pick up resistance irrespective of the climate condition.

These problems have been solved by an aqueous coating composition, in particular by a dispersion paint, comprising or obtained by mixing or combining a) an aqueous dispersion binding agent comprising copolymers A) and dispersed inorganic solid particles B) and optionally at least one alkoxy-substituted polysiloxane C) (also referred to as aqueous composite particle dispersion or in a preferred embodiment as aqueous nano composite particle dispersion), wherein the inorganic solid particles B) are selected from the group consisting of fumed silica, colloidal silica, non-delaminated sheet silicates, delaminated sheet silicates and mixtures thereof, wherein the copolymers A) comprise as copolymerized units A1) at least one comonomer having a hydrolyzable silane as functional group wherein said functional group does not act as a chain extender during the copolymerization reaction, and as copolymerized units A2) ethylenically unsaturated comonomers different from comonomers A1); b) at least one organic, in particular water-dispersed or dispersible or water-emulsifiable or emulsified, binding agent different from binding agent a) and selected from the group consisting of vinylacetate/ethylene copolymers, copolymers based on vinylaromatic compounds and (meth)acrylates, in particular acrylates, copolymers based on all-acrylic compounds, and mixtures thereof; c) at least one dispersing agent; d) at least one filler; e) at least one organic solvent; and f) water.

In some preferred embodiments the coating composition of the present invention further comprises g) at least one thickener, h) at least one defoaming agent, i) at least one, in particular at room temperature (20 °C) volatile, neutralizing agent, j) at least one wetting agent, k) at least one preservative, in particular film preservative and/or in-can preservative, and/or 1) at least one pigment, in a suitable embodiments of the coating compositions of the present invention thickeners, defoaming agents, wetting agents, film preservative and in-can preservatives are present, optionally at least one pigment.

The amount of water usually present in the aqueous coating compositions of the present invention usually lies in the range from 30 to 65 weight percent, preferably in the range from 35 to 55 weight percent, based on the total weight of said composition.

For the aqueous composite particle dispersion, i.e. binding agent a), comonomer A1) preferably comprises or consists of at least one ethylenically unsaturated monomer having at least one alkoxysilyl group. Preferably, comonomer A1) is selected from the group consisting of (3-methacryloxypropyl)-triethoxysilane, (methacryloyloxymethyl) methyldiethoxysilane, (3-methacryloxypropyl) methyldiethyloxysilane and mixtures thereof, (3-methacryloxypropyl) trimethoxysilane being particularly preferred.

Furthermore, according to another preferred embodiment for the aqueous composite particle dispersion, i.e. binding agent a), comonomer A2) comprises or consists of at least one of an ester of an ethylenically unsaturated carboxylic acid, a vinyl ester of an saturated carboxylic acid, and a vinylaromatic monomer. Preferably, comonomer A2) comprises methacrylic acid, butyl acrylate, methyl methacrylate, ethyl acrylate or mixtures thereof.

Comonomer A2) or the mixture of comonomers A2) is advantageously choosen such that a copolymer A) results upon copolymerization having a glass transition temperature below 60 _{°}C, preferably below 45 °C.

The at least one organic binding agent b) preferably comprises vinylacetate/ethylene copolymers, styrene/acrylate copolymers and/or copolymers based on pure (all-acrylic) acrylates. Most preferred organic binding agents b) are styrene/acrylate copolymers and copolymers based on pure (all-acrylic) acrylates, while pure acrylates are particularly preferred. Pure acrylates in the meaning of the present invention may also contain minor impurities of styrene comonomers.

In some preferred embodiments, alternatively, and in particular in addition, the at least one copolymer A) has a glass transition temperature not below 20 °C, preferably in the range from 25 to 45 °C and more preferably in the range from 30 to 40 °C. Moreover, alternatively or in particular simultaneously the the at least one organic binding agent b) has a glass transition temperature not below 15 °C, preferably in the range from 18 to 30 °C and more preferably in the range from 20 to 25 °C. According to another embodiment the organic water-dispersed or disposable binding agent b) has an average particle size in the range from 50 nm to 500 nm, preferably in the range from 75 nm to 400 nm and more preferably in the range from 90 nm to 200 nm.

The weight ratio of component a) to component b), i.e. component a) : component b) (solid content in each case), advantageously is in the range from 85:15 to 10:90, preferably in the range from 80:20 to 20:80, and more preferably in the range from 70:30 to 30:70. With aqueous coating compositions which contain pigments, in particular titanium dioxide, the weight ratio component a) : component b) (solid content in each case) lies advantageously is in the range from 60:40 to 40:60. And, with aqueous coating compositions which do not contain any titanium dioxide, and which in particular do not contain any pigments, the weight ratio component a) : component b) (solid content in each case) lies advantageously is in the range from 65:35 to 35:65.

The aqueous coating composition according to the present invention preferably contains, based on the total weight of said aqueous coating composition, 2,0 to 30 weight percent (solid content), preferably 4,0 to 20,0 weight percent, and more preferably 7,5 to 15,0, of the at least one organic binding agent a) or 2,0 to 25 weight percent (solid content), preferably 5,0 to 25,0 weight percent, and more preferably 7,5 to 17,5, of the at least one organic binding agent b). In an even more preferred embodiment the aqueous coating composition according to the present invention preferably contains, based on the total weight of said aqueous coating composition, 2,0 to 30 weight percent (solid content), in particular 4,0 to 25.0 weight percent, of the at least one organic binding agent a) and 2,0 to 25 weight percent (solid content), in particular 5,0 to 20.0 weight percent, of the at least one organic binding agent b). Further preferred are aqueous coating composition according to the present invention which contain, based on the total weight of said aqueous coating composition, 4,0 to 25.0 weight percent of the at least one organic binding agent a) and 5,0 to 20.0 weight percent of the at least one organic binding agent b).

In another preferred embodiment of the aqueous coating composition of the present invention the inorganic solid particles B) have an average particle size not above 200 nm, preferably not above 150 nm, and more preferably in the range from 2 to 100 nm. Advantageously, finely divided inorganic solid particles B) are used which have an average particle diameter of smaller than or equal to 50 nm.

The aqueous dispersion binding agent a) is preferably obtained by preparing the copolymer A), i.e. by conducting the polymerization reaction, usually a radical polymerization reaction, in an aqueous polymerization medium in the presence of the dispersed inorganic solid particles B). Alternatively, the inorganic solid particles can be dispersed in the aqueous polymerization medium, e.g. by aid of dispersants and/or ultrasonic sonotrodes. In general, those dispersed inorganic solid particles, i.e. the finely divided inorganic solids are particularly suitable having a solubility in water at 20 ° C and 1 atm smaller 1 g/l, preferably smaller 0.01 g/l. Suitable finely divided inorganic solid particles can for example be obtained by precipitation reactions or chemical reactions in the gas phase.

Preferred inorganic solid particles B) are selected from the group consisting of silica, layer silicates, aluminum oxide, hydroxyaluminum, calcium carbonate, magnesium carbonate, calcium orthophosphate, magnesium orthophosphate, iron (II) oxide, iron (III) oxide, iron (II) oxide, tin (IV) oxide, cerium (IV) oxide, yttrium (III) oxide, titanium dioxide, hydroxyl apatite, zinc oxide and zinc sulfide. Particularly preferred inorganic solid particles B) comprise fumed silica, colloidal silica, layered (=sheet) silicates or mixtures thereof.

Suitable binding agents a) as well as their preparation for example described in WO 2008/135422 A1, WO 2009/053317 A1 and WO 2013/072769A1.

In a preferred embodiment the alkoxy-substituent of the alkoxy-substituted polysiloxane C) has 1 to 5 carbon atoms, and can be a straight chain or branched. In particular the alkoxy substituent is or comprises an ethoxy-substitutent. In a suitable embodiment the alkoxy-substituted polysiloxane C) is present in an at least partially hydrolyzed form. Typically, the alkoxy-substituted polysiloxane C) is present in the binder mixture a), in particular in an at least partially hydrolyzed form, in an amount in the range from 0.1 to 5 weight percent, based on the solids content of component a). The alkoxy-substituted polysiloxane C) can be added to the aqueous copolymer dispersion either during polymerization or after polymerization of the copolymer A). In the latter case, the polysiloxane C) is preferably added at a pH of less than 7 and at a temperature of at least 40°C. These conditions usually favor hydrolysis of the alkoxy groups on the polysiloxane. In general, it is preferable to add the polysiloxane during or at the end of the polymerization reaction to form copolymer A), but before the pH is raised to stabilize the dispersion, if the polysiloxane is not present in the initial monomer mixture.

Suitable filler materials, if present in the aqueous coating composition of the present invention, comprise silicates, in particular grounded silica sands, barium sulphate, boro silicate glass filler, solid spherical particles, in particular comprising ceramic, quartz, corundum and/or glass particles, hollow spherical particles or mixtures thereof. Preferably, silicates and barium sulphate or or silicates, barium sulphate and boro silicate glass filler are present in the aqueous coating composition of the present invention. Irrespective of whether the aqueous coating composition according to the present invention contains a single filler material or a mixture of fillers said filler material preferably has at least a bimodal particle size distribution. Accordingly, if a mixture of fillers is used these individual filler materials of said mixture preferably have a monomodal particle size distribution wherein monomodal particle size distributions of said individual filler materials do not match.

Suitabel silicate filler materials can for example be selected from the group consisting of ring silicates, chain silicates, band silicates, sheet silicates, framework silicates, nesosilicates, group silicates, technical silicates, and mixtures thereof. Suitable silicates also comprise aluminum silicates. Exemplary silicate fillers comprise in one embodiment quartzites, feldspars, vulcanites or any mixtures of said fillers.

The average particle size (D50) of the silicate filler material, in particular the grounded silica sand, is not above 200 µm, preferably not above 100 µm and more preferably not above 50 µm. According to another preferred embodiment the average particle size of the silicate filler material is in the range from 5 to 100 µm, in particular in the range from 15 to 50 µm.

If not explicitly mentioned, average particle size shall mean particle size according to D50 value.

The average particle size (D50) of barium sulphate preferably is not above 50 µm, more preferably not above 25 µm and even more preferably not above 10 µm. According to another preferred embodiment the average particle size of the barium sulphate is in the range from 2 to 40 µm, in particular in the range from 4 to 20 µm. And, the average particle size (D50) of the boro silicate glass filler is preferably not above 200 µm, more preferably not above 100 µm and even more preferably not above 50 µm. According to another preferred embodiment the average particle size of the boro silicate glass filler is in the range from 5 to 40 µm, in particular in the range from 10 to 30 µm. Further, the average particle size of the solid or hollow spherical particles preferably is not above 150 µm, preferably in the range from 55 to 145 µm and more preferably in the range from 60 to 140 µm. Moreover, in a preferred embodiment, the D90 value of the boro silicate glass filler is in the range from 25 to 75 µm and in particular in the range from 40 to 60 µm while advantageously the D50 value is in the range from 10 to 30 µm; and, alternatively and in particular simultaneously the D10 value preferably is in the range from 1 to 5 µm and in particular from 2 to 4 µm. The average particle size (D50) can be determined in accordance with DIN ISO 9276-1:2004-09 (Representation of results of particle size analysis - Part 1: Graphic representation) and ISO 0276-2:2014-05 (Representation of results of particle size analysis - Part 2: Calculation of average particle sizes/diameters and moments from particle size distributions).

Suitable pigments can be selected from the group consisting of organic and inorganic pigments. Among the inorganic pigments zinc oxide and titanium dioxide are preferred. While all modifications of titanium dioxide can be used, Rutil is most preferred. Inorganic pigments as such as titanium dioxide can be present in a monomodal or in a multimodal, for example bimodal particle size distribution.

The coating composition according to the present invention can in one embodiment, preferably only initially, also contain at least one volatile neutralizing agent. said neutralizing agent preferably is selected from the group consisting of ammonia, alkyl amines, alkanol amines, alkyl alkanol amines and mixtures thereof, 2-amino-2-methyl-1-propanol being most preferred.

The aqueous coating composition of the present invention usually has a or is being adjusted to a pH in the range from 8,0 to 11,0, in particular in the range from 9,0 to 10,0.

If present in the aqueous coating composition of the present invention the at least one thickener is preferably selected from the group consisting of cellulose ether, cellulose ether derivatives, polycarboxylates, polysaccharides, polysaccharide derivatives, alkaline acrylic thickeners, polyurethane thickeners and mixtures thereof. It has surprisingly been found to be most advantageous in terms of solving the problem underlying the present invention to make use of cellulose ethers and/or cellulose ether derivatives, e. g. HEC-thickeners and polyurethane thickeners.

It has also been found to be advantageous to include into the aqueous coating composition of the present invention at least one organic solvent. Suitable organic solvents can in one embodiment be selected from the group consisting of glycols, e.g. propylene glycol and/or butylene glycol; glycol ether, e.g. dipropylene glycol, triethylene glycol, tripropylene glycol, propylene glycol methylether and/or propylene glycol methylethylether; organic ester compounds, e.g. ethyl acetate; ketones; keto alcohols, e.g. diacetone alcohol; ester alcohols, gasoline, in particular high-boiling gasolines, white spirit, aliphatic alcohols, e.g. ethyl hexanol, isodecanol and/or isononanol; dicarboxylic acid dialkyl ester; naphthalenes; 2,2,4-trimethyl-1,3-pentandiol-monoisobutyrate (Texanol); dipropylene glycol-n-butylether (DPnB); tripropylene glycol-n-butylether (TPnB); dimethyl phthalate (DMP); fat alcohol ethoxylates, e.g. ethoxylates of lauryl alcohol, isotridecanol, myristyl alcohol, cetyl alcohol and/or stearyl alcohol; benzoic acid isononyl esters, e.g. isononyl benzoate, 2-ethylhexyl benzoate amd/or isodecyl benzoate.

According to a preferred embodiment, the organic solvent is selected from the group consisting of propylene glycol, 2,2,4-trimethyl-1,3-pentandiol-monoisobutyrate, dipropylene glycol-n-butylether, white spirit and mixtures thereof.

The dispersing agent of the aqueous coating composition of the present invention preferably is selected from the group consisting of hydrophobic copolymer polyelectrolyte dispersants, anionic polyelectrolyte dispersants, hydrophobic copolymer dispersants and mixtures thereof. According to a particular preferred embodiment the dispersing agent comprises anionic dispersants such as hydrophobic carboxylated copolymer polyelectrolyte dispersants, e.g. in the form of their sodium salts.

Suitable wetting agents comprise anionic surfactant-based wetting agents.

The aqueous coating composition of the present invention in a preferred embodiment is essentially free of any carbonate and/or kaolin filler, more preferably essentially free of any carbonate and Kaolin filler.

The aqueous coating compositions of the present invention advantageously have a viscosity (determined at 30 °C, and using Spindle #12 (200 rpm) and measured according to Stormer Viscometer) in the range from 60 to 150 KU, preferably in the range from 70 to 120 KU, more preferably in the range from 80 to 100 KU, and in particular in the range from 85 to 95 KU (Kerb units).

The object underlying the present invention has also been solved by a coating, in particular a facade coating, obtained by a single or repeated application of an aqueous composition according to the present invention.

Preferred coatings according to the present invention exhibit a pigment volume concentration not above 75 %, in particular not above 60 %.

The aqueous coating composition of the present invention can in particular be used for the preparation of a coating, in particular a facade coating, exhibiting excellent dust pickup resistance, color durability and/or color fastness, in particular even in desert climate.

With the aqueous coating compositions of the present invention it has surprisingly been found that they provide even in desert areas good color durability, color retention and color fastness. In addition, the coating compositions of the present invention offer the advantage of diminished dirt and dust pick up even under hot and humid conditions as to be found in desert areas. That is, even with little or no rain the high quality appearance of the coating obtained with the aqueous coating compositions of the present invention can be maintained for long periods of time. Thereby, recoating cycles can be extended which also results in reduced long term costs. It has also surprisingly been found with the coating compositions of the present invention that coatings, in particular facade coatings, can be obtained having an improved mechanical strength and having good adhesion properties. In this manner, even under rather hot and humid conditions as to be found in desert areas, the formation of cracks can be significantly reduced. Due to its increased dirt/dust pick up resistance the coatings of the present invention retain an increased ability to reflect solar radiation which results in energy savings in those climatic regions in which air conditioning systems are usually excessively employed. Moreover, it has been surprisingly found that in the preparation of the aqueous coating compositions of the present invention significant savings in terms of carbon dioxide reduction can be accomplished thereby arriving at a reduced carbon foot print. In summary with the coating compositions of the present invention improvements in terms of sustainability and energy savings can be obtained while simultaneously yielding a rather economic approach to an improved coating.

Although modifications and changes may be suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description as well as the claims could be essential alone or in every combination for the realization of the invention in its different embodiments.

## Claims

1. An aqueous coating composition, in particular dispersion paint, comprising or obtained by mixing
a) an aqueous dispersion binding agent comprising copolymers A) and dispersed inorganic solid particles B) and optionally at least one alkoxy-substituted polysiloxane C) (aqueous composite particle dispersion), wherein the inorganic solid particles B) are selected from the group consisting of fumed silica, colloidal silica, non-delaminated sheet silicates, delaminated sheet silicates and mixtures thereof,
wherein the copolymers A) comprise as copolymerized units A1) at least one comonomer having a hydrolyzable silane as functional group wherein said functional group does not act as a chain extender during the copolymerization reaction, and as copolymerized units A2) ethylenically unsaturated comonomers different from comonomers A1),
b) at least one organic, in particular water-dispersed or dispersible or water-emulsifiable or emulsified, binding agent different from binding agent a) and selected from the group consisting of vinylacetate/ethylene copolymers, copolymers based on vinylaromatic compounds and (meth)acrylates, in particular acrylates, copolymers based on all-acrylic compounds, and mixtures thereof,
c) at least one dispersing agent,
d) at least one filler,
e) at least one organic solvent, and
f) water.

2. The coating composition of claim 1, further comprising
g) at least one thickener,
h) at least one defoaming agent,
i) at least one, in particular at room temperature (20 °C) volatile, neutralizing agent,
j) at least one wetting agent,
k) at least one preservative, in particular film preservative and/or in-can preservative, and/or
1) at least one pigment, in particular titanium dioxide.

3. The coating composition of claim 1 or 2, wherein
comonomer A1) comprises or consists of at least one ethylenically unsaturated monomer having at least one alkoxysilyl group, and/or
wherein comonomer A2) comprises or consists of at least one of an ester of an ethylenically unsaturated carboxylic acid, a vinyl ester of an saturated carboxylic acid, and a vinylaromatic monomer.

4. The coating composition according to any of the preceding claims, wherein
comonomer A1) is selected from the group consisting of (3-methacryloxypropyl)-triethoxysilane, (methacryloyloxymethyl) methyldiethoxysilane, (3-methacryloxypropyl) methyldiethyloxysilane and mixtures thereof, in particular (3-methacryloxypropyl) trimethoxysilane, and/or
wherein comonomer A2) comprises methacrylic acid, butyl acrylate, methyl methacrylate, ethyl acrylate or mixtures thereof.

5. The coating composition according to any of the preceding claims, wherein
the weight ratio component a) : component b) (solid content in each case) is in the range from 85:15 to 10:90, preferably in the range from 80:20 to 20:80, more preferably in the range from 70:30 to 30:70.

6. The coating composition according to any of the preceding claims comprising 2,0 to 30 weight percent (solid content), preferably 4,0 to 20,0 weight percent, and more preferably 7,5 to 15,0 weight percent, of the at least one organic binding agent a) and/or
2,0 to 25 weight percent (solid content), preferably 5,0 to 25,0 weight percent, and more preferably 7,5 to 17,5 weight percent, of the at least one organic binding agent b).

7. The coating composition according to any of the preceding claims, wherein
the at least one organic binding agent b) comprises vinylacetate/ethylene copolymers, styrene/acrylate copolymers and/or copolymers based on pure (all-acrylic) acrylates, in particular styrene/acrylate copolymers or copolymers based on pure (all-acrylic) acrylates.

8. The coating composition according to any of the preceding claims, wherein
the at least one copolymer A) has a glass transition temperature not below 20 °C, preferably in the range from 25 to 45 °C and more preferably in the range from 30 to 40 °C, and/or wherein
the at least one organic binding agent b) has a glass transition temperature not below 15 °C, preferably in the range from 18 to 30 °C and more preferably in the range from 20 to 25 °C.

9. The coating composition according to any of the preceding claims, wherein
the inorganic solid particles B) have an average particle size not above 200 nm, preferably not above 150 nm, and more preferably in the range from 2 to 100 nm, and/or wherein
the organic water-dispersed or dispersible binding agent b) has an average particle size in the range from 50 nm to 500 nm, preferably in the range from 75 to 400 nm and more preferably in the range from 90 to 200 nm.

10. The coating composition according to any of the preceding claims, wherein
the at least one filler is selected from the group consisting of silicates, in particular grounded silica sands, barium sulphate, boro silicate glass filler, solid spherical particles, in particular comprising ceramic, quartz, corundum and/or glass particles, hollow spherical particles and mixtures thereof, in particular silicates and barium sulphate or silicates, barium sulphate and boro silicate glass filler, and/or wherein the filler or the mixture of fillers has an at least bimodal distribution.

11. The coating composition according to any of the preceding claims, wherein
the average particle size (D50) of the silicate filler, in particular the grounded silica sand, is not above 200 µm, preferably not above 100 µm and more preferably not above 50 µm, and/or wherein
the average particle size of barium sulphate is not above 50 µm, preferably not above 25 µm and more preferably not above 10 µm, and/or wherein
the average particle size of the boro silicate glass filler is not above 200 µm, preferably not above 100 µm and more preferably not above 50 µm, and/or wherein the average particle size of the solid or hollow spherical particles is not above 150 µm, preferably in the range from 55 to 145 µm and more preferably in the range from 60 to 140 µm.

12. The coating composition according to any of the preceding claims, wherein
the organic solvent is selected from the group consisting of glycols, e.g. propylene glycol and/or butylene glycol; glycol ether, e.g. dipropylene glycol, triethylene glycol, tripropylene glycol, propylene glycol methylether and/or propylene glycol methylethylether; organic ester compounds, e.g. ethyl acetate; ketones; keto alcohols, e.g. diacetone alcohol; ester alcohols, gasoline, in particular high-boiling gasolines, white spirit, aliphatic alcohols, e.g. ethyl hexanol, isodecanol and/or isononanol; dicarboxylic acid dialkyl ester; naphthalenes; 2,2,4-trimethyl-1,3-pentandiol-monoisobutyrate (Texanol); dipropylene glycol-n-butylether (DPnB); tripropylene glycol-n-butylether (TPnB); dimethyl phthalate (DMP); fat alcohol ethoxylates, e.g. ethoxylates of lauryl alcohol, isotridecanol, myristyl alcohol, cetyl alcohol and/or stearyl alcohol; benzoic acid isononyl esters, e.g. isononyl benzoate, 2-ethylhexyl benzoate amd/or isodecyl benzoate.

13. The coating composition according to claim 12, wherein
the organic solvent is selected from the group consisting of propylene glycol, 2,2,4-trimethyl-1,3-pentandiol-monoisobutyrate, dipropylene glycol-n-butylether, white spirit and mixtures thereof.

14. The coating composition according to any of the preceding claims, wherein
the dispersing agent is selected from the group consisting of hydrophobic copolymer polyelectrolyte dispersants, anionic polyelectrolyte dispersants, hydrophobic copolymer dispersants and mixtures thereof, in particular hydrophobic carboxylated copolymer polyelectrolyte dispersants, and/or
wherein the at least one wetting agent is an anionic surfactant-based wetting agent.

15. The coating composition according to any of claims 2 to 14, wherein
the at least one thickener is selected from the group consisting of cellulose ether, cellulose ether derivatives, polycarboxylates, polysaccharides, polysaccharide derivatives, alkaline acrylic thickeners, polyurethane thickeners and mixtures thereof, in particular cellulose ether and/or cellulose ether derivatives and polyurethane thickeners.

16. A coating, in particular a facade coating, obtained by a single or repeated application of an aqueous composition according to any one of the preceding claims.

17. The coating according to claim 16 having
a pigment volume concentration not above 75 %, preferably not above 60 %, and more preferably in the range from 30 to 60 %.

18. Use of a coating composition according to anyone of claims 1 to 15 for the preparation of a coating, in particular a facade coating, exhibiting dust pickup resistance, color durability and/or color fastness, in particular in desert climate.

## Patentansprüche

1. Wässrige Beschichtungszusammensetzung, insbesondere Dispersionsfarbe, umfassend oder erhalten durch Mischen
a) eines wässrigen Dispersionsbindemittels, umfassend Copolymere A) und dispergierte anorganische Feststoffpartikel B) und gegebenenfalls mindestens ein Alkoxy-substituiertes Polysiloxan C) (wässrige Kompositpartikeldispersion),wobei die anorganischen Feststoffpartikel B) aus der Gruppe ausgewählt sind, bestehend aus pyrogener Kieselsäure, kolloidaler Kieselsäure, nicht delaminierten Schichtsilikaten, delaminierten Schichtsilikaten und Mischungen davon,
wobei die Copolymere A) als copolymerisierte Einheiten A1) mindestens ein Comonomer umfassen, das ein hydrolysierbares Silan als funktionelle Gruppe aufweist, wobei die funktionelle Gruppe während der Copolymerisationsreaktion nicht als ein Kettenverlängerer agiert, und als copolymerisierte Einheiten A2) ethylenisch ungesättigte Comonomere, die sich von den Comonomeren A1) unterscheiden,
b) mindestens eines organischen, insbesondere in Wasser dispergierten oder dispergierbaren oder in Wasser emulgierbaren oder emulgierten, Bindemittels, das sich von dem Bindemittel a) unterscheidet und aus der Gruppe ausgewählt ist, bestehend aus Vinylacetat/Ethylen-Copolymeren, Copolymeren auf Basis von vinylaromatischen Verbindungen und (Meth)acrylaten, insbesondere Acrylaten, Copolymeren auf Basis von Reinacrylaten und Mischungen davon,
c) mindestens eines Dispergiermittels,
d) mindestens eines Füllstoffs,
e) mindestens eines organischen Lösungsmittels und
f) Wasser.

2. Beschichtungszusammensetzung nach Anspruch 1, ferner umfassend
g) mindestens ein Verdickungsmittel,
h) mindestens ein Entschäumungsmittel,
i) mindestens ein, insbesondere bei Raumtemperatur (20 °C) flüchtiges, Neutralisierungsmittel,
j) mindestens ein Netzmittel,
k) mindestens ein Konservierungsmittel, insbesondere ein Filmkonservierungsmittel und/oder Topfkonservierungsmittel, und/oder
l) mindestens ein Pigment, insbesondere Titandioxid.

3. Beschichtungszusammensetzung nach Anspruch 1 oder 2, wobei
das Comonomer A1) mindestens ein ethylenisch ungesättigtes Monomer umfasst oder daraus besteht, das mindestens eine Alkoxysilylgruppe aufweist, und/oder
wobei das Comonomer A2) mindestens eines von einem Ester einer ethylenisch ungesättigten Carbonsäure, einem Vinylester einer gesättigten Carbonsäure, und einem vinylaromatischen Monomer umfasst oder daraus besteht.

4. Beschichtungszusammensetzung nach einem der vorhergehenden Ansprüche, wobei
das Comonomer A1) aus der Gruppe ausgewählt ist, bestehend aus (3-Methaycryloxypropyl)-triethoxysilan, (Methacryloyloxymethyl)-methyldiethoxysilan, (3-Methacryloxypropyl)-methyldiethyloxysilan und Mischungen davon, insbesondere (3-Methaycryloxypropyl)-triethoxysilan und/oder
wobei das Comonomer A2) Methacrylsäure, Butylacrylat, Methylmethacrylat, Ethylacrylat oder Mischungen davon umfasst.

5. Beschichtungszusammensetzung nach einem der vorhergehenden Ansprüche, wobei
das Gewichtsverhältnis Komponente a) : Komponente b) (jeweils Feststoffanteil) im Bereich von 85:15 bis 10:90, vorzugsweise in dem Bereich von 80:20 bis 20:80, besonders bevorzugt im Bereich von 70:30 bis 30:70 liegt.

6. Beschichtungszusammensetzung nach einem der vorhergehenden Ansprüche, umfassend
2,0 bis 30 Gewichtsprozent (Feststoffgehalt), vorzugsweise 4,0 bis 20,0 Gewichtsprozent, und besonders bevorzugt 7,5 bis 15,0 Gewichtsprozent, des mindestens einen organischen Bindemittels a) und/oder
2,0 bis 25 Gewichtsprozent (Feststoffgehalt), vorzugsweise 5,0 bis 25,0 Gewichtsprozent und besonders bevorzugt 7,5 bis 17,5 Gewichtsprozent, des mindestens einen organischen Bindemittels b).

7. Beschichtungszusammensetzung nach einem der vorhergehenden Ansprüche, wobei
das mindestens eine organische Bindemittel b) Vinylacetat/Ethylen-Copolymere, Styrol/Acrylat-Copolymere und/oder Copolymere auf Basis von Reinacrylaten, insbesondere Styrol/Acrylat-Copolymere oder Copolymere auf Grundlage von Reinacrylaten umfasst.

8. Beschichtungszusammensetzung nach einem der vorhergehenden Ansprüche, wobei
das mindestens eine Copolymer A) eine Glasübergangstemperatur aufweist, die nicht unterhalb von 20 °C, vorzugsweise in dem Bereich von 25 bis 45 °C und besonders bevorzugt in dem Bereich von 30 bis 40 °C liegt, und/oder wobei das mindestens eine organische Bindemittel b) eine Glasübergangstemperatur aufweist, die nicht unterhalb von 15 °C, vorzugsweise in dem Bereich von 18 bis 30 °C und besonders bevorzugt in dem Bereich von 20 bis 25 °C liegt.

9. Beschichtungszusammensetzung nach einem der vorhergehenden Ansprüche, wobei
die anorganischen Feststoffpartikel B) eine durchschnittliche Partikelgröße aufweisen, die nicht über 200 nm, vorzugsweise nicht über 150 nm, und besonders bevorzugt im Bereich von 2 bis 100 nm liegt, und/oder wobei
das organische in Wasser dispergierte oder dispergierbare Bindemittel b) eine durchschnittliche Partikelgröße in dem Bereich von 50 nm bis 500 nm, vorzugsweise in dem Bereich von 75 bis 400 nm und besonders bevorzugt im Bereich von 90 bis 200 nm aufweist.

10. Beschichtungszusammensetzung nach einem der vorhergehenden Ansprüche, wobei
der mindestens eine Füllstoff aus der Gruppe ausgewählt ist, bestehend aus Silikaten, insbesondere gemahlenem Quarzsand, Bariumsulfat, Borosilikatglasfüllstoff, festen sphärischen Partikeln, insbesondere umfassend Keramik-, Quarz-, Korund- und/oder Glaspartikel, hohlen sphärischen Partikeln und Mischungen davon, insbesondere Silikaten und Bariumsulfat oder Silikaten, Bariumsulfat und Borosilikatglasfüllstoff, und/oder wobei der Füllstoff oder das Gemisch von Füllstoffen eine mindestens bimodale Verteilung aufweist.

11. Beschichtungszusammensetzung nach einem der vorhergehenden Ansprüche, wobei
die durchschnittliche Partikelgröße (D50) des Silikatfüllstoffs, insbesondere des gemahlenen Quarzsandes, nicht über 200 µm, vorzugsweise nicht über 100 µm und besonders bevorzugt nicht über 50 µm liegt, und/oder wobei
die durchschnittliche Partikelgröße von Bariumsulfat nicht über 50 µm, vorzugsweise nicht über 25 µm und besonders bevorzugt nicht über 10 µm liegt, und/oder wobei
die durchschnittliche Partikelgröße des Borosilikatglasfüllstoffs nicht über 200 µm, vorzugsweise nicht über 100 µm und besonders bevorzugt nicht über 50 µm liegt, und/oder wobei
die durchschnittliche Partikelgröße der festen oder hohlen sphärischen Partikel nicht über 150 µm, vorzugsweise in dem Bereich von 55 bis 145 µm und besonders bevorzugt im Bereich von 60 bis 140 µm liegt.

12. Beschichtungszusammensetzung nach einem der vorhergehenden Ansprüche, wobei
das organische Lösungsmittel aus der Gruppe ausgewählt ist, bestehend aus Glykolen, z. B. Propylenglykol und/oder Butylenglykol; Glykolether, z. B. Dipropylenglykol, Triethylenglykol, Tripropylenglykol, Propylenglykolmethylether und/oder Propylenglykolmethylethylether; organischen Esterverbindungen, z. B. Ethylacetat; Ketonen; Ketoalkoholen, z. B. Diacetonalkohol; Esteralkoholen, Benzin, insbesondere hochsiedenden Benzinen, Terpentinersatz, aliphatischen Alkoholen, z. B. Ethylhexanol, Isodecanol und/oder Isononanol; Dicarbonsäuredialkylester; Naphthalinen; 2,2,4-Trimethyl-1,3-pentandiol-monoisobutyrat (Texanol); Dipropylenglykol-n-butylether (DPnB); Tripropylenglykol-n-butylether (TPnB); Dimethylphthalat (DMP); Fettalkoholethoxylaten, z. B. Ethoxylaten von Laurylalkohol, Isotridecanol, Myristylalkohol, Cetylalkohol und/oder Stearylalkohol; Benzoesäureisononylestern, z. B. Isononylbenzoat, 2-Ethylhexylbenzoat und/oder Isodecylbenzoat.

13. Beschichtungszusammensetzung nach Anspruch 12, wobei
das organische Lösungsmittel aus der Gruppe ausgewählt ist, bestehend aus Propylenglykol, 2,2,4-Trimethyl-1,3-pentandiol-monoisobutyrat, Dipropylenglykol-n-butylether, Terpentinersatz und Mischungen davon.

14. Beschichtungszusammensetzung nach einem der vorhergehenden Ansprüche, wobei
das Dispergiermittel aus der Gruppe ausgewählt ist, bestehend aus hydrophoben Copolymer-Polyelektrolyt-Dispergiermitteln, anionischen Polyelektrolyt-Dispergiermitteln, hydrophoben Copolymer-Dispergiermitteln und Mischungen davon, insbesondere hydrophoben carboxylierten Copolymer-Polyelektrolyt-Dispergiermitteln, und/oder
wobei das mindestens eine Netzmittel ein auf einem anionischen Tensid basierendes Netzmittel ist.

15. Beschichtungszusammensetzung nach einem der Ansprüche 2 bis 14, wobei
das mindestens eine Verdickungsmittel aus der Gruppe ausgewählt ist, bestehend aus Celluloseether, Celluloseetherderivaten, Polycarboxylaten, Polysacchariden, Polysaccharidderivaten, alkalischen Acrylverdickungsmitteln, Polyurethanverdickungsmitteln und Mischungen davon, insbesondere Celluloseether und/oder Celluloseetherderivaten und Polyurethanverdickungsmitteln.

16. Beschichtung, insbesondere eine Fassadenbeschichtung, erhalten durch einmaliges oder wiederholtes Auftragen einer wässrigen Beschichtung nach einem der vorhergehenden Ansprüche.

17. Beschichtung nach Anspruch 16, die Folgendes aufweist:
eine Pigmentvolumenkonzentration, die nicht über 75 %, vorzugsweise nicht über 60 % und besonders bevorzugt im Bereich von 30 bis 60 % liegt.

18. Verwendung einer Beschichtungszusammensetzung nach einem der Ansprüche 1 bis 15 zur Herstellung einer Beschichtung, insbesondere einer Fassadenbeschichtung, die eine Widerstandsfähigkeit gegenüber der Aufnahme von Staub, Farbbeständigkeit und/oder Farbechtheit, insbesondere im Wüstenklima, aufweist.

## Revendications

1. Composition aqueuse de revêtement, en particulier une peinture en dispersion, comprenant ou obtenue en mélangeant
a) un agent liant en dispersion aqueuse comprenant des copolymères A) et des particules inorganiques solides B) dispersées et facultativement au moins un polysiloxane à substitution avec alcoxy C) (dispersion aqueuse de particules composites),
où les particules inorganiques solides B) sont sélectionnées dans le groupe constitué d'une silice pyrogénée, d'une silice colloïdale, des phyllosilicates non délaminés, des phyllosilicates délaminés et des mélanges de ceux-ci,
où les copolymères A) comprennent en tant que motifs A1) copolymérisés au moins un comonomère ayant un silane hydrolysable en tant que groupe fonctionnel, où ledit groupe fonctionnel n'agit pas comme un allongeur de chaîne lors de la réaction de copolymérisation, et en tant que motifs A2) copolymérisés des comonomères à insaturation éthylénique différents des comonomères A1),
b) au moins un agent liant organique, en particulier dispersé ou dispersible dans l'eau ou émulsionnable ou émulsionné dans l'eau, différent de l'agent liant a) et sélectionné dans le groupe constitué des copolymères d'acétate de vinyle/éthylène, des copolymères à base de composés vinylaromatiques et de (méth)acrylates, en particulier les acrylates, les copolymères à base de composés tout acryliques, et les mélanges de ceux-ci,
c) au moins un agent de dispersion,
d) au moins une charge,
e) au moins un solvant organique, et
f) de l'eau.

2. Composition de revêtement selon la revendication 1, comprenant en outre
g) au moins un épaississant,
h) au moins un agent antimousse,
i) au moins un agent neutralisant volatil, en particulier à température ambiante (20 °C),
j) au moins un agent mouillant,
k) au moins un conservateur, en particulier un conservateur de film et/ou un conservateur en pot, et/ou
l) au moins un pigment, en particulier le dioxyde de titane.

3. Composition de revêtement selon la revendication 1 ou 2, dans laquelle
le comonomère A1) comprend ou consiste en au moins un monomère à insaturation éthylénique ayant au moins un groupe alcoxysilyle, et/ou
dans laquelle le comonomère A2) comprend ou consiste en au moins un parmi un ester d'un acide carboxylique à insaturation éthylénique, un ester de vinyle d'un acide carboxylique saturé, et un monomère vinylaromatique.

4. Composition de revêtement selon l'une quelconque des revendications précédentes, dans laquelle le comonomère A1) est sélectionné dans le groupe constitué du (3-méthacryloxypropyl)-triéthoxysilane, du (méthacryloyloxyméthyl)méthyldiéthoxysilane, du (3-méthacryloxypropyl)méthyldiéthyloxysilane et des mélanges de ceux-ci, en particulier le (3-méthacryloxy-propyl)triméthoxysilane, et/ou
dans laquelle le comonomère A2) comprend l'acide méthacrylique, l'acrylate de butyle, le méthacrylate de méthyle, l'acrylate d'éthyle ou des mélanges de ceux-ci.

5. Composition de revêtement selon l'une quelconque des revendications précédentes, dans laquelle le rapport pondéral composant a) : composant b) (teneur en solides dans chaque cas) est dans la plage allant de 85 : 15 à 10 : 90, de préférence dans la plage allant de 80 : 20 à 20 : 80, particulièrement préférablement dans la plage allant de 70 : 30 à 30 : 70.

6. Composition de revêtement selon l'une quelconque des revendications précédentes, comprenant 2,0 à 30 pour cent en poids (teneur en solides), de préférence 4,0 à 20,0 pour cent en poids, et particulièrement préférablement 7,5 à 15,0 pour cent en poids, d'au moins un agent liant organique a) et/ou 2,0 à 25 pour cent en poids (teneur en solides), de préférence 5,0 à 25,0 pour cent en poids, et particulièrement préférablement 7,5 à 17,5 pour cent en poids, de l'au moins un agent liant organique b).

7. Composition de revêtement selon l'une quelconque des revendications précédentes, dans laquelle l'au moins un agent liant organique b) comprend des copolymères d'acétate de vinyle/éthylène, des copolymères de styrène/acrylate et/ou des copolymères à base d'acrylates purs (tout acryliques), en particulier des copolymères de styrène/acrylate ou des copolymères à base d'acrylates purs (tout acryliques).

8. Composition de revêtement selon l'une quelconque des revendications précédentes, dans laquelle
l'au moins un copolymère A) présente une température de transition vitreuse non inférieure à 20 °C, de préférence dans la plage allant de 25 à 45 °C et particulièrement préférablement dans la plage allant de 30 à 40 °C, et/ou dans laquelle l'au moins un agent liant organique b) présente une température de transition vitreuse non inférieure à 15 °C, de préférence dans la plage allant de 18 à 30 °C et particulièrement préférablement dans la plage allant de 20 à 25 °C.

9. Composition de revêtement selon l'une quelconque des revendications précédentes, dans laquelle
les particules inorganiques solides B) présentent une taille particulaire moyenne non supérieure à 200 nm, de préférence non supérieure à 150 nm, et particulièrement préférablement dans la plage allant de 2 à 100 nm, et/ou dans laquelle l'agent liant organique b) dispersé ou dispersible dans l'eau présente une taille particulaire moyenne dans la plage allant de 50 nm à 500 nm, de préférence dans la plage allant de 75 à 400 nm et particulièrement préférablement dans la plage allant de 90 à 200 nm.

10. Composition de revêtement selon l'une quelconque des revendications précédentes, dans laquelle l'au moins une charge est sélectionnée dans le groupe constitué des silicates, en particulier les sables de silice broyés, du sulfate de baryum, d'une charge de verre de borosilicate, des particules sphériques solides, en particulier comprenant des particules de céramique, quartz, corindon et/ou verre, des particules sphériques creuses et des mélanges de celles-ci, en particulier des silicates et le sulfate ou des silicates de baryum, d'une charge de verre de sulfate de baryum et de borosilicate, et/ou dans laquelle la charge ou le mélange de charges présente une répartition au moins bimodale.

11. Composition de revêtement selon l'une quelconque des revendications précédentes, dans laquelle
la taille particulaire moyenne (D50) de la charge de silicate, en particulier du sable de silice broyé, n'est pas supérieure à 200 µm, de préférence pas supérieure à 100 µm et particulièrement préférablement pas supérieure à 50 µm, et/ou dans laquelle
la taille particulaire moyenne du sulfate de baryum n'est pas supérieure à 50 µm, de préférence pas supérieure à 25 µm et particulièrement préférablement pas supérieure à 10 µm, et/ou dans laquelle
la taille particulaire moyenne de la charge de verre de borosilicate n'est pas supérieure à 200 µm, de préférence pas supérieure à 100 µm et particulièrement préférablement pas supérieure à 50 µm, et/ou dans laquelle
la taille particulaire moyenne des particules sphériques solides ou creuses n'est pas supérieure à 150 µm, de préférence dans la plage allant de 55 à 145 pm et particulièrement préférablement dans la plage allant de 60 à 140 µm.

12. Composition de revêtement selon l'une quelconque des revendications précédentes, dans laquelle
le solvant organique est sélectionné dans le groupe constitué des glycols, par exemple le propylène glycol et/ou le butylène glycol ; d'un éther de glycol, par exemple le dipropylène glycol, le triéthylène glycol, le tripropylène glycol, le propylène glycol méthyléther et/ou le propylène glycol méthyléthyléther ; des composés d'ester organique, par exemple l'acétate d'éthyle ; des cétones ; des céto-alcools, par exemple le diacétone alcool ; des ester-alcools, d'une essence, en particulier les essences à point d'ébullition élevé, du white spirit, des alcools aliphatiques, par exemple l'éthylhexanol, l'isodécanol et/ou l'isononanol ; d'un ester de dialkyle d'acide dicarboxylique ; des naphtalènes ; du 2,2,4-triméthyl-1,3-pentanediol-monoisobutyrate (Texanol) ; du dipropylène glycol-n-butyléther (DPnB) ; du tripropylène glycol-n-butyléther (TPnB) ; du phtalate de diméthyle (DMP) ; des éthoxylates d'alcools gras, par exemple les éthoxylates d'alcool laurylique, d'isotridécanol, d'alcool myristylique, d'alcool cétylique et/ou d'alcool stéarylique ; les esters d'isononyle de l'acide benzoïque, par exemple le benzoate d'isononyle, le benzoate de 2-éthylhexyle et/ou le benzoate d'isodécyle.

13. Composition de revêtement selon la revendication 12, dans laquelle
le solvant organique est sélectionné dans le groupe constitué du propylène glycol, du 2,2,4-triméthyl-1,3-pentanediol-monoisobutyrate, le dipropylène glycol-n-butyléther, le white spirit et les mélanges de ceux-ci.

14. Composition de revêtement selon l'une quelconque des revendications précédentes, dans laquelle
l'agent de dispersion est sélectionné dans le groupe constitué des dispersants polyélectrolytes de copolymères hydrophobes, des dispersants polyélectrolytes anioniques, des dispersants copolymères hydrophobes et des mélanges de ceux-ci, en particulier les dispersants polyélectrolytes de copolymères carboxylés hydrophobes, et/ou
dans laquelle l'au moins un agent mouillant est un agent mouillant à base d'un tensioactif anionique.

15. Composition de revêtement selon l'une quelconque des revendications 2 à 14, dans laquelle
l'au moins un épaississant est sélectionné dans le groupe constitué d'un éther de cellulose, des dérivés d'éther de cellulose, des polycarboxylates, des polysaccharides, des dérivés de polysaccharide, des épaississants acryliques alcalins, des épaississants de polyuréthane et des mélanges de ceux-ci, en particulier un éther de cellulose et/ou les dérivés d'éther de cellulose et les épaississants de polyuréthane.

16. Revêtement, en particulier un revêtement de façade, obtenu par une application unique ou répétée d'une composition aqueuse selon l'une quelconque des revendications précédentes.

17. Revêtement selon la revendication 16 présentant une concentration en volume de pigment non supérieure à 75 %, de préférence non supérieure à 60 %, et particulièrement préférablement dans la plage allant de 30 à 60 %.

18. Utilisation d'une composition de revêtement selon l'une quelconque des revendications 1 à 15 pour la préparation d'un revêtement, en particulier un revêtement de façade, présentant une résistance à l'absorption des poussières, une durabilité de couleur et/ou une solidité de couleur, en particulier en climat désertique.
